# EUROPEAN PATENT APPLICATION

(11) **EP 1 662 394 A2**
(43) Date of publication of application: **31.05.2006**
(21) Application number: 05024911.9
(22) Date of filing: 15.11.2005
(51) Int. Cl.: G06F 11/07

(54) **Method for accessing data sectors and processing an access failure in a hard disk drive of a mobile communication terminal**

(30) Priority: 19.11.2004 KR 2004095094
(71) Applicant: Samsung Electronics Co., Ltd., Suwon-si, Gyeonggi-Do (KR)
(72) Inventor: Park, Seok-Hyo Samsung Electronics Co., Ltd., Suwon-si Gyeonggi-do (KR); Kim, Hark-Sang Samsung Electronics Co., Ltd., Suwon-si Gyeonggi-do (KR); Lee, Byung-Kwan Samsung Electronics Co., Ltd., Suwon-si Gyeonggi-do (KR)
(74) Representative: Lang, Johannes

(57) **Abstract**

A method is provided for accessing a media file divided and stored in a plurality of data sectors, and processing a bad sector in a mobile communication terminal having a hard disk drive. The method includes generating an access request event for the media file; designating an address of a first data sector to be accessed, as an access index for indicating an address to be accessed; attempting to access the data sector positioned at the access index for a predetermined time, and reading media data from an access-success data sector when access succeeds and writing predetermined default data into an access-failure data sector when the access fails; and determining whether a next data sector to be accessed exists, and when it is determined that the next data sector to be accessed exists, increasing the access indexing by 1 and accessing a data sector positioned at the increased access index.

## Description

### BACKGROUND OF THE INVENTION

### 1. Field of the Invention:

The present invention relates generally to a method for processing a specific data sector detected as a bad sector in a hard disk mobile communication terminal. In particular, the present invention relates to a method for writing predetermined default data into a bad sector and overcoming an access inability state when the bad sector is detected.

### 2. Description of the Related Art:

In general, a mobile communication terminal refers to a device for wirelessly communicating with a base station, and has a main call function. However, current mobile communication terminals have been adding supplementary functions for processing multimedia information, in addition to the basic voice call function. In other words, the mobile communication terminal can include a camera to process image data and perform a supplementary multimedia function such as play a music file and provide an electronic dictionary. Accordingly, the mobile communication terminal requires a large memory capacity to process the multimedia function. In other words, the mobile communication terminal requires the large capacity of memory to store media data such as music and images such as motion picture and still picture. For this, the mobile communication terminal uses a built-in or external auxiliary memory to store the media data. As the auxiliary memory, a semiconductor memory or a disk device can be used. The semiconductor memory can employ a nonvolatile memory such as a flash memory. The disk device can employ a hard disk drive (HDD), an optical disk drive (ODD) or the like. The optical disk drive can be a write-once, read-many type compact disk read-only memory (CD-ROM) or a digital video disk (DVD).

In a mobile communication terminal using a hard disk drive (HDD) (hereinafter, referred to as "hard disk mobile communication terminal") as the auxiliary memory, the hard disk drive is accessed according to the need to write and read data. However, while the hard disk mobile communication terminal is in service, a hard disk can be damaged due to a user's mistake or a system error, thereby generating a bad sector. The bad sector is classified as a physical bad sector and a logical bad sector. The physical bad sector is caused due to physical impact or static electricity applied to the hard disk. The logical bad sector is caused by a computer virus, file entanglement or operating system (OS) shock. In the case where the physical bad sector is not corrected , it causes and changes an adjacent normal sector to become a physical bad sector due to a damaged platter fragment. Accordingly, the hard disk mobile communication terminal has a high possibility of generating the physical bad sector due to an unexpected dropping impact since the user always carries the terminal.

Accordingly, when the hard disk mobile communication terminal having a partial physical or logical bad sector in the hard disk drive tries to access data of the bad sector later, it cannot identify the data of the bad sector, and continuously tries to access the data of the bad sector in an unlimited loop routine, thereby getting into a process inability state. Specifically, in a real time process operating system (OS), which is open to the public such as a real time operating system (RTOS), a predetermined access time (for example, a time taken to try to access more than five hundred times for about 8 seconds) is required for the hard disk drive to access and read data. Even after the access fails, the access is continuously retried, thereby causing the hard disk mobile communication terminal to be in a state of not exiting a routine of accessing the data of the bad sector (hereinafter, referred to as "bad sector access error state").

When the hard disk mobile communication terminal gets into the bad sector access error state, it freezes. Accordingly, when the hard disk mobile communication terminal is in the bad sector access error state, there is no choice but to turn off and again turn on or reset the hard disk mobile communication terminal, thereby re-booting and re-activating the hard disk mobile communication terminal. However, when the hard disk mobile communication terminal is in the bad sector access error state and is re-booted, there is a drawback in that a work content performed before the bad sector access error state is erased and must be reentered. Specifically, when the corresponding bad sector of the hard disk is accessed again after re-booting, the hard disk mobile communication terminal is again in the bad sector access error state and becomes more unreliable. Accordingly, there is a drawback in that the hard disk mobile communication terminal is degraded in reliability.

### SUMMARY OF THE INVENTION

It is, therefore, an object of the present invention to provide a method for overcoming a process inability state such as a conventional infinite loop state and effectively processing a bad sector when the bad sector is generated in a hard disk drive of a hard disk mobile communication terminal.

It is another object of the present invention to provide a solution for recording a specific data value in a detected bad sector, thereby preventing repetitive access attempts when the same bad sector is detected later.

It is a further object of the present invention to provide a solution for providing a separate arrangement menu, thereby processing a bad sector later.

To achieve the above and other objects, there is provided a method for accessing a media file divided and stored in a plurality of data sectors, and processing a bad sector in a mobile communication terminal having a hard disk drive. The method comprises generating an access request event for the media file stored in the plurality of data sectors; designating an address of a first data sector to be accessed, as an access indexing indicating an address to be accessed; trying to access the data sector positioned at the access indexing for a predetermined time, and reading media data from an access-success data sector when the access succeeds and, on the contrary, writing predetermined default data into an access-failure data sector when the access fails; and determining whether or not there exists a next data sector to be accessed, and when it is determined that there exists the next data sector to be accessed, increasing the access indexing by 1 and accessing a data sector positioned at the increased access indexing.

### BRIEF DESCRIPTION OF THE DRAWINGS

The above and other objects, features and advantages of the present invention will become more apparent from the following detailed description when taken in conjunction with the accompanying drawings in which:
FIG. 1 a block diagram illustrating a hard disk mobile communication tenninal instructed according to an embodiment of the present invention;
FIG. 2 is a block diagram illustrating an internal configuration of a hard disk drive according to an embodiment of the present invention;
FIG. 3 is a flowchart illustrating a process of accessing a hard disk drive according to an embodiment of the present invention;
FIG. 4 is a view illustrating an example of writing data in a data area of a hard disk drive according to an embodiment of the present invention;
FIG. 5 is a flowchart illustrating a process of storing an address of a data sector, which is suspected to be a bad sector, in a database according to an embodiment of the present invention; and
FIG. 6 is a flowchart illustrating a process of finally checking a bad sector and storing default data in the bad sector of a database according to an embodiment of the present invention.
Throughout the drawings, the same or similar elements are denoted by the same reference numerals.

### DETAILED DESCRIPTION OF AN EXEMPLARY EMBODIMENT

An embodiment of the present invention will now be described in detail with reference to the accompanying drawings. In the following description, a detailed description of known functions and configurations incorporated herein has been omitted for conciseness. The following terins based on functions of the present invention can be varied depending on a general practice of those skilled in the art and should be defined on the basis of the invention disclosed in a whole specification.

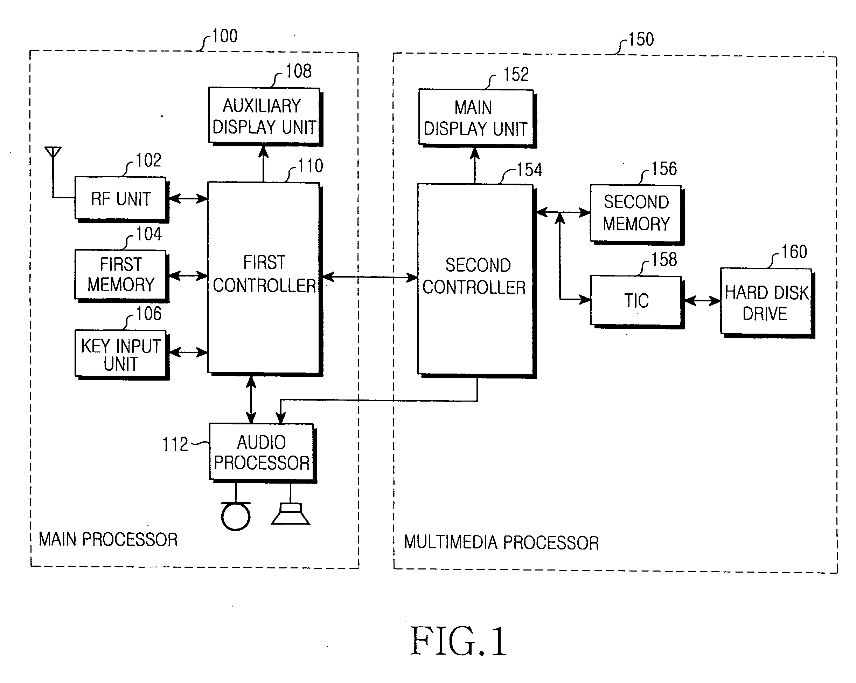

FIG. 1 a block diagram illustrating a hard disk mobile communication terminal according to an embodiment of the present invention.

The hard disk mobile communication terminal comprises a main processor 100 and a multimedia processor 150. The main processor 100 performs a call termination/origination and call processing function to process a phone call, which is an inherent function of the hard disk mobile communication terminal. The multimedia processor 150 processes media data stored in a hard disk drive 160 of the hard disk mobile communication terminal, and processes wireless media data received through a radio frequency (RF) unit 102.

The main processor 100 comprises the RF unit 102, a first memory 104, a key input unit 106, an auxiliary display unit 108, an audio processor 112, and a first controller 110. The RF unit 102 performs a wireless communication function for the hard disk mobile communication terminal. The RF unit 102 comprises a RF transmitter and a RF receiver. The RF transmitter up-converts a frequency of a transmission signal, and amplifies the up-converted transmission signal. The RF receiver low-noise amplifies a reception signal and down-converts a frequency of the amplified reception signal.

The first controller 110 comprises a transmitter for coding and modulating a transmission signal, and a receiver for decoding and demodulating a reception signal. In other words, the first controller 110 comprises a modulator/demodulator (modem) and a coder/decoder (codec). Here, the codec comprises a data codec for processing packet data and the like, and an audio codec for processing an audio signal such as voice. The audio processor 112 receives an audio signal from the audio codec of the first controller 110, and reproduces the received audio signal. The audio processor 112 receives an audio signal from a microphone, and transmits the received audio signal to the audio codec.

The key input unit 106 comprises alphanumeric keys for inputting numeric and character information, and function keys for setting a variety of functions. The key input unit 115 can include function keys for accessing data of the hard disk drive 160 according to an embodiment of the present invention.

The first memory 104 can comprise a program memory and a data memory. The program memory stores programs for controlling a call process and an overall operation of the hard disk mobile communication terminal. The data memory can store call-related data (for example, a phonebook). The data memory temporarily stores data, which is generated during program execution.

The auxiliary display unit 108 displays normal state information (a time and the like) of the hard disk mobile communication terminal and whether a call is income or not, under the control of the first controller 110.

The main processor 100 is comprised of function parts for processing the phone call function of the hard disk mobile communication terminal. The first controller 110 controls the overall operation of the hard disk mobile communication terminal. The first controller 110 comprising the codec and the modem is being described, but the codec and the modem are separated from the first controller 110 to independently configure a data processor, thereby embodying the first controller 110.

The multimedia processor 150 stores and reproduces the media data. The multimedia processor 150 comprises a second controller 154, a main display unit 152, a second memory 156, a transition integrated circuit (TIC) 158, and the hard disk drive 160. Hereinafter, each of them will be described in detail.

The second controller 154 stores and reproduces the media data. In other words, the second controller 154 reproduces or stores the media data, which is received through the RF unit 102. Alternatively, the second controller 154 reproduces or stores the media data from or in the hard disk drive 160. However, the present invention relates to a method for processing an access error state caused in the hard disk drive 160. Accordingly, a detailed description will now be made of a process where the second controller 154 processes only the media data stored in the hard disk drive except the media data received through the RF unit 102. It is obvious that the media data can be moving picture data, image data or sound data. The moving picture data is based on a motion picture compression algorithm such as audio/video (AVI) and Moving Picture Experts Group (MPEG). The image data such as still image data is based on a still image compression algorithm such as Joint Photographic Experts Group (JPEG). The sound data is based on a sound compression algorithm such as MPEG-layer 3 (MP3) or Wavelet-Based Anesthetic Value (WAV).

The second controller 154 operates under the control of the first controller 110 to store or reproduce the media data in or from the hard disk drive 160. In other words, when the hard disk mobile communication terminal performs the phone call function in a call mode, the first controller 110 controls a whole operation of the hard disk mobile communication terminal. However, when the hard disk mobile communication terminal receives a media data process event request in a standby mode, the first controller 110 detects the event request and transfers a control right of the hard disk mobile communication terminal to the second controller 154.

The main display unit 152 displays call-related information in the normal call mode under the control of the first controller 110, and displays media-related information in the standby mode under the control of the second controller 154. The main display unit 152 can employ a liquid crystal display (LCD). The main display unit 152 comprises a LCD controller, a memory for storing image data, and a LCD display element. Here, when the LCD is embodied on a touch screen basis, the LCD can also function as an input unit.

The second memory 156 is a temporary buffer for temporarily storing the media data such as the image data and the sound data. The second memory 156 can be embodied using a synchronous dynamic random access memory (SDRAM) and the like. The media data to be currently reproduced is read from the hard disk drive 160 and temporarily stored in the second memory 156, and is normally reproduced without its loss concern. In other words, when the media data stored in the hard disk drive 160 is accessed, the second controller 154 can store and process the media data of the hard disk drive 160 in the temporary buffer of the second memory 156. Here, the temporary buffer does not employ all of the second memory 156, and a predetermined size (for example, 32 or 64 Megabytes) of the second memory 156 can be allocated to and used as the temporary buffer.

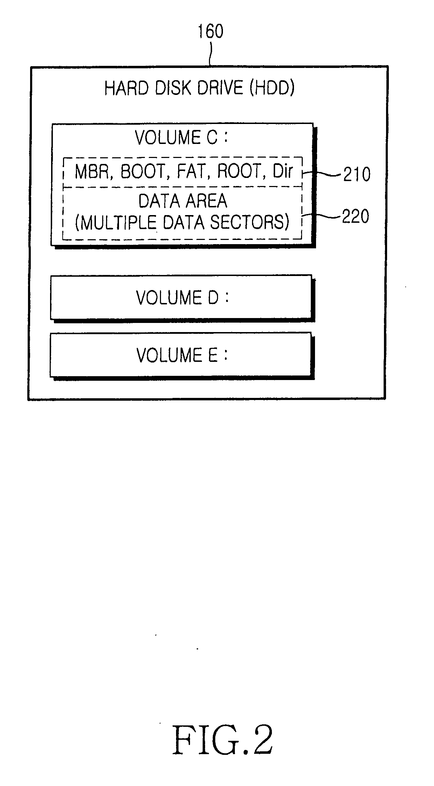

The hard disk drive 160 is a recording medium for storing the media data. That is, the hard disk drive 160 is an auxiliary memory device for rotating a distal type aluminum substrate, which has magnetic substance coated thereon, while storing and reading data. The hard disk mobile communication terminal can store and read large-capacity media data of hundreds of Megabytes to dozens of Gigabytes, thereby storing and reproducing a variety of large-capacity media data. An internal configuration of the hard disk drive 160 is illustrated in FIG. 2 and a description thereof will be made later with reference to FIG. 2.

The TIC 158 performs a memory interface function to support a data and address input/output (I/O) interface of the second controller 154. The hard disk drive 160 is supported only in a true integrated drive electronics (IDE) mode. The TIC 158 supports the true IDE mode, and allows interface between the second controller 154 and the hard disk drive 160.

IDE refers to a standard electronic interface used between a data bus of a motherboard, and the hard disk drive 160. The hard disk drive 160 supports an IDE interface. The second controller 154 can be interfaced in an I/O mode, a memory mode, and the IDE mode. Accordingly, in the case where the hard disk drive 160 supports an IDE interface function and concurrently the second controller 154 supports all of an I/O-mode interface function, a memory-mode interface function and the IDE interface function, the TIC 158 may not be employed. In this case, the second controller 154 can directly access the hard disk drive 160. However, in the case where the hard disk drive 160 supports the IDE interface function, but the second controller 154 supports the I/O-mode interface function and the memory-mode interface function except the IDE interface function, the second controller 154 cannot access the hard disk drive 160. Therefore, the TIC 158 is provided between the second controller 154 and the hard disk drive 160 to allow the IDE interface. Accordingly, when the second controller 154 accesses the hard disk drive 160 through the TIC 158, the second controller 154 interfaces in the I/O mode or in the memory mode, and the TIC 158 interfaces in the IDE mode with the hard disk drive 160.

After that, the TIC 158 converts IDE-interfaced data in an interface manner of the second controller 154, and transmits the converted data to the second controller 154.

Referring to FIG. 1, a brief description will be made of a process of operating the hard disk mobile communication terminal in the call mode and a process of processing the media data in the standby mode.

First, the process of operating in the call mode will be described as follows. When a user's dialing request is received through the key input unit 106, the first controller 110 detects an outgoing call request and processes reception dial information, and converts the processed dialed information into a radio frequency (RF) signal through the RF unit 102. After that, when a called party responds to the user's dialing request, the first controller 110 detects a called party's response through the RF unit 102. Then the first controller 110 establishes a call line using the RF unit 102 and the audio processor 112, and performs a communication function. On the contrary, if an incoming request is received from a base transceiver station (BTS), the first controller 110 detects the incoming request, and generates an incoming bell or ringing sound and concurrently displays outgoing subscriber information on the auxiliary display unit 108. After that, when the user responds, the first controller 110 detects a user's response and provides an incoming call service. The first controller 110 processes a character message transmission service such as a short message service (SMS) in addition to a voice call described above.

The process of processing the media data in the standby mode will be described as follows. In the standby mode, the media data is processed under the control of the second controller 154 having the control right transferred from the first controller 110. In an embodiment of the present invention, key data inputted through the key input unit 106 in the standby mode is transmitted to the second controller 154. Among the media data, the sound data is processed in the second controller 154 and decoded and reproduced through the audio processor 112, and the image data is displayed on the main display unit 152 under the control of the second controller 154. In another embodiment of the present invention, the second controller 154 can directly process the key data and the sound data irrespective of the first controller 110.

The still image data can use a JPEG coding scheme, and the motion picture data can use an MPEG coding scheme. Accordingly, the second controller 154 can include a JPEG codec and an MPEG codec, and process the image data using the JPEG and MPEG codecs. Likewise, the sound data can use an MP3 coding scheme. Accordingly, the second controller 154 can comprise an MP3 codec, and process the sound data using the MP3 codec. In the case where compression is performed using other coding schemes than the JPEG, MPEG and MP3 coding schemes, the second controller 154 can comprise a codec supporting a specific coding scheme, and process the media data using the codec supporting the specific coding scheme.

FIG. 2 illustrates an internal configuration of the hard disk drive in the hard disk mobile communication tenninal. The hard disk drive (HDD) is characterized by a memory address having a minimum address to a maximum address. The hard disk drive has one master boot record (MBR) at its bottom. The MBR has at least one piece of volume information and therefore, can provide position information of all volumes. A first sector (header area) 210 of each volume comprises a boot record and accordingly comprises detailed information such as a type and a size of a corresponding volume, the number of bytes per sector, the number of sectors per cluster, the number of sectors per file system, a volume name, a serial number, a boot execution code, and the like.

The file system refers to a table for recording each partial state of the hard disk drive to indicate whether any sector is used or not in a data area 220 occupying a majority of the hard disk drive 160. Each of DOS, Window, OS/2, McIntosh and Unix based operating systems (OS) and a real time operating system (RTOS) has a file system representing whether files are positioned anywhere of a hierarchy structure. As an example of the file system, Window has a file allocation table (FAT) such as FAT 16 and FAT 32. Accordingly, in the OS (for example, the RTOS) of the hard disk mobile communication terminal, the data area 220 of the hard disk drive 160 is managed on a per-cluster basis. When a predetermined data file is recorded in a hard disk, a hard disk space is allocated on the per-cluster basis. Such an arrangement of the cluster is managed using the file system. A directory manages information on the files stored in the hard disk drive. The file information comprises a file name, a file extension, a file size, a last recording time and date of the file, and the like. The file recorded in the file system is placed in the directory (in a folder or a sub-directory in Window 95) of the hierarchy structure, and the file systems have a rule of naming the file. On the basis of the rule, the file name is limited in length, it is determined whether any characters can be used, and even the file extension is limited in length in a few systems. The file system table comprises a format for setting a path going to the file through a directory structure.

The hard disk drive can have the file system managed by a specific OS as described above. The file system allows the hard disk drive to name an electronic dictionary, a music file or an image file, and to identify whether the files should be logically positioned anywhere for storage or retrieval. However, due to a physical cause such as an external impact or a logical cause such as a program error, the above-configured hard disk drive has a defect of a physical bad sector or a logical bad sector that any sector area is damaged in the header area 210 comprising the boot record, the FAT and the directory, and the data area 220. Assuming that the specific data area 220 is damaged in each sector area of the hard disk drive 160, thereby causing the bad sector, the present invention will be now described for description convenience. However, it is obvious that the present invention is applicable when the bad sector is caused even in other areas than the data area 220.

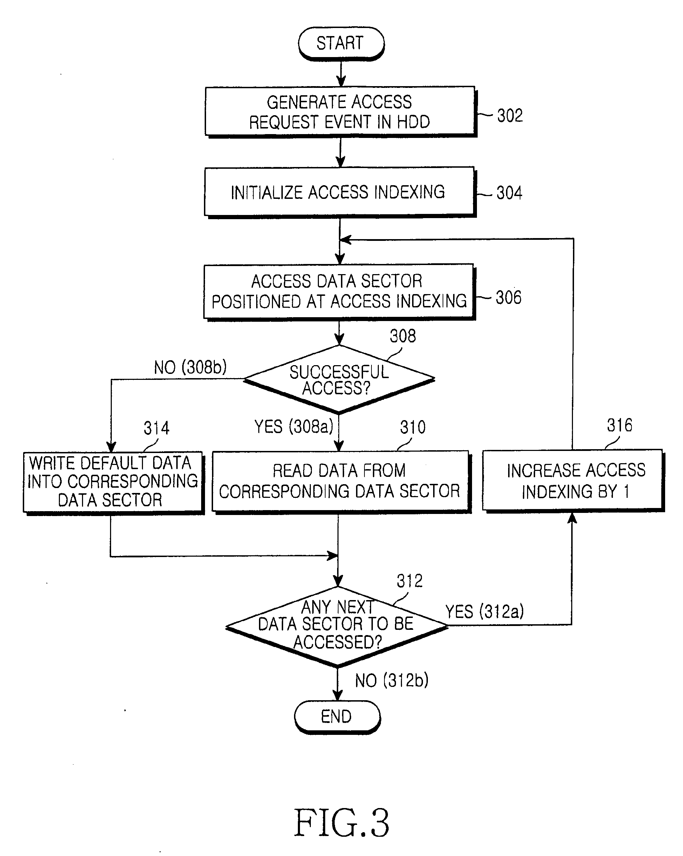

FIG. 3 is a flowchart illustrating the process of processing the bad sector, which is detected when a media file is reproduced from the hard disk drive 160 according to an embodiment of the present invention. In the standby mode of the hard disk mobile communication terminal, when a hard disk drive access request event is generated at step 302 in such a case that the motion picture data such as MPEG data or the sound data such as MP3 data is read and a specific media file is reproduced in the hard disk drive 160 of the hard disk mobile communication terminal, the second controller 154 tries to access a first one of a plurality of data sectors, at which the access request data is positioned in the hard disk drive 160. For the access trial, the second controller 154 initializes indexing (hereinafter, referred to as "access indexing") having address information of the data sector to be accessed at step 304. The initialization of the access indexing at step 304 designates the access indexing to an address of a firstly-positioned one of the plurality of data sectors to be accessed and read.

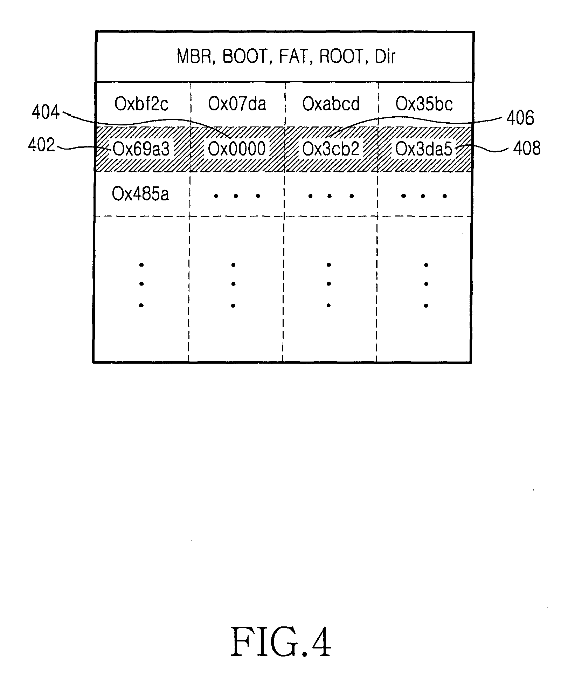

The data sector of the hard disk drive 160 is partitioned on a per-block basis for example, per 512 bytes. The second controller 154 performs accessing sequentially from the foremost one of a plurality of access requested data sectors. For example, in case where the specific media file is stored in a fifth data sector 402 (see FIG. 4), a sixth data sector 404, a seventh data sector 406, and an eighth data sector 408 as shown in FIG. 4, when the access request event for the corresponding media file is generated at step 302, the address of the firstly-positioned fifth data sector 402 of the data sectors having the media file stored is initialized and set to indexing data at step 304.

After that, it is tried to access the data sector positioned at a corresponding access indexing at step 306. A process of accessing the data sector positioned at the access indexing at step 306 will be described in more detail as follows. The TIC 158 receives an access command from the second controller 154, interfaces with the hard disk drive 160, and tries to access the data sector as requested. When the requested access to the data sector succeeds and corresponding data is read from the hard disk drive 160, the TIC 158 transmits the read data to the second controller 154, and the second controller 154 receives and temporarily stores the transmitted data in the temporary buffer of the second memory 156 and reproduces the stored data. The access trial at step 306 is performed more than a predetermined number of times based on revolutions per minute (RPM) of the hard disk drive 160. The second controller 154 provides an access algorithm when an access is performed. For example, assuming that one sector is read during a single rotation in the hard disk drive 160, when the hard disk drive 160 has a speed of 4440 RPM, 13.5ms (60 seconds/4440 RPM) is taken for a single rotation. Accordingly, the hard disk is rotated 74 times (1 second/13.5 ms) for one second, and the access trial is performed 592 times (8 seconds*74 times) for 8 seconds.

In the case where accessing the data sector fails at step 308b even though the access trial is performed more than a predetermined number of times for a predetermined time, the access trial is no longer performed and the TIC 158 transmits an access failure message to the second controller 154. The second controller 154 receives the access failure message, and writes default data into the corresponding data sector at step 314. The default data refers to a value, which is set to detect that the corresponding data sector is the bad sector and to try to access a next data sector, without trying to continue accessing the bad sector, when the corresponding data sector is accessed later and it is determined that the corresponding data sector has the default data recorded. The default data is set to have a predetermined. Alternatively, the default data is set to record 0 or 1 in all the corresponding data sectors, such as "Ox0000" shown in the sixth data sector 404 of FIG. 4 or "Oxffff," thereby making it possible to detect later that the corresponding data sector is the bad sector.

After the access fails at step 308b and the default data is written into the corresponding data sector at step 314 or, on the contrary, the access succeeds at step 308a and data is read from the corresponding data sector at step 310, it is determined whether there exists a next data sector to be accessed at step 312. If it is determined that there exists the next data sector to be accessed at step 312a, the access indexing increases by 1 at step 316. After that, data sector positioned at the increased access indexing is repetitively attempted to be accessed at step 306 and read corresponding data at step 310, or to write the default data into the corresponding data sector at step 314 and determine whether or the next data sector to be accessed exists at step 312.

If it is determined that the next data sector to be accessed does not exist at step 312b, the access trial is ended. After that, the hard disk mobile communication terminal reproduces the data, which is read when the access succeeds. Accordingly, the default data, which is recorded in the sixth data sector 404 due to access failure as shown in FIG. 4, is not utilized as usable data when a playback function is performed. In other words, the access-failure data sector 404 has merely a one-sector size of 512 bytes. Therefore, when the complete media file is reproduced, the playback function is instantly stopped only at the access-failure data sector 404, and the access-failure data sector 404 has no impact on media file playback. For example, even though it fails to access a partial data sector of the whole media file such as a sound file or an image file, when the whole media file is reproduced, it appears that the sound is instantly off or the image is instantly cut, and the access-failure data sector 404 has less influence upon whole media file playback.

In the case where the read data at step 310 is the default data (the predefined specific value, or the 0x0000 or Oxffff) previously recorded in the bad sector, it is detected that the corresponding data sector is the bad sector, and the read default data is not reproduced. Accordingly, in the case where a specific media file has the bad sector, the bad sector is detected for a bad sector detection time, and the default data is recorded in the detected bad sector when a corresponding media file is initially reproduced. By doing so, when the same media file is reproduced later, the next normal data sector is read without needing to again consume time trying to access the bad sector. For example, it takes about 8 seconds to perform the access trial more than five hundred times in the 4000 rpm hard disk drive, thereby making it possible to reproduce the media file without a bad sector access error.

As described at step 308 of FIG. 3, data sector is accessed more than four thousand times for about 8 seconds to detect the bad sector. However, 8 seconds taken to detect one bad sector may be a long time in a user's position. Accordingly, in another embodiment of the present invention, when access to a data sector fails within one or two seconds, access attempts are no longer performed. When there is a user request later, it is accurately determined whether the data sector is a bad sector. Default data is written into the data sector when it is determined that the data sector is the bad sector. Such an algorithm allows the default data to be written into the bad sector when the user desires to do, and therefore a user's convenience can be improved.

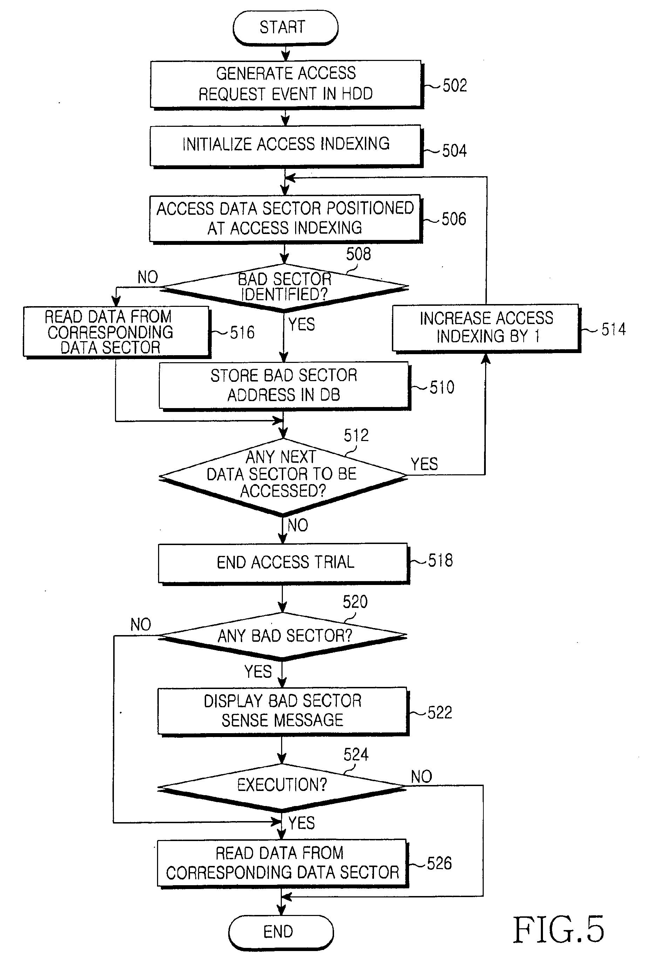

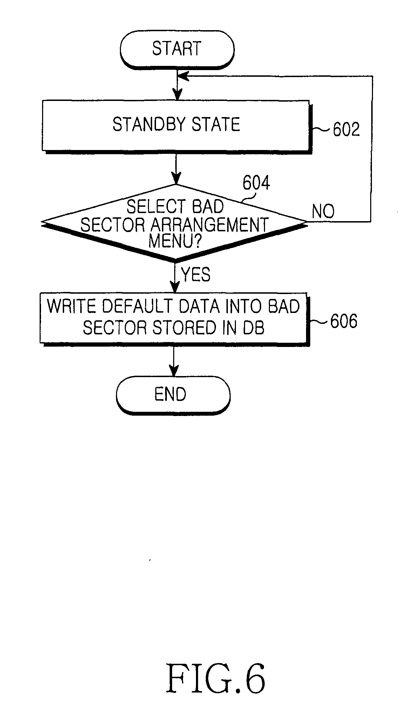

FIG. 5 is a flowchart illustrating a process of storing the address of the data sector, which is suspected of being the bad sector, in a database. FIG. 6 is a flowchart illustrating a process of again accurately determining the data sector having the address stored in the database when the user requests, and storing the default data in the bad sector when it is finally determined that the data sector is the bad sector. Hereinafter, each process will be described. Referring to FIG. 5, a detailed description will be made of a process of indicating that the bad sector is generated, and processing the bad sector when the bad sector is generated in the hard disk drive 160 of the hard disk mobile communication terminal.

In the standby mode of the hard disk mobile communication terminal, the user uses the key input unit (keypad) 106 and requests to reproduce the specific media file such as MPEG and MP3, thereby generating a hard disk drive access request event at step 502. If the access request event is generated, the second controller 154 initializes and designates the access indexing, which indicates the address of the data sector having the stored access requested media file to the address of the first data sector having the media file stored at step 504. In other words, the initializing of the access indexing refers to designating the access indexing to the address of the first-positioned one of the plurality of data sectors to be accessed.

After that, the second controller 154 tries to access the data sector positioned at the corresponding access indexing at Step 506. The access trial is performed only for a short time of one or two seconds. In the Step 306 of FIG. 3, the access trial is performed more than four thousand times for about 8 seconds until it succeeds, but the access trial is performed only for one or two seconds in this embodiment. For example, assuming that one sector is read during a single rotation rotation in the hard disk drive, when the hard disk drive has the speed of 4440 RPM, 13.5ms (60 seconds/4440 RPM) is taken for a single rotation. Accordingly, the hard disk is rotated 74 times (1 second/13.5 ms) for one second, and the access trial is performed 148 times (2 seconds*74 times) for two seconds. When the access fails even though the access trial is sequentially performed for one or two seconds, a corresponding data sector is identified as the bad sector at step 508 and an address of the corresponding data sector is stored in a bad sector database at step 510. The bad sector database temporarily stores the address of the data sector identified as the bad sector, and is not shown in FIG. 1 but provided in the second memory 156.

In a more detailed description, in the case where the data access fails even though the access trial is performed more than a predetermined number of times for a predetermined time (148 times for two seconds), the TIC 158 no longer performs the access trial and transmits the access failure message to the second controller 154. The second controller 154 receives the access failure message, and identifies the corresponding data sector as the bad sector at step 508. After that, the second controller 154 stores the address of the access-failure data sector in the bad sector database of the second memory 156 at step 510. The second controller 154 no longer commands the access trial, and determines whether the next data sector to be accessed at step 512 exists. If it is determined that the next data sector access-requested exists, the access indexing increases by 1 at step 514. After the access indexing increases by 1, steps 506, 508 and 510 are repeated.

If the access trial succeeds at step 506, the second controller 154 reads data from the corresponding data sector at step 516, and determines whether the next data sector to be accessed exists at step 512. If it is determined that the next data sector access-requested exists, the second controller 154 increases the access indexing by 1 at step 514. Then the data sector positioned at the increased access indexing is accessed at step 506 and the corresponding data is read. Alternatively, if the access fails, the corresponding data sector is identified as the bad sector and steps 506 to 512 are repeated until the data sector to be accessed no longer exists.

When the next data sector to be accessed no longer exists, the second controller 154 commands an access trial end at step 518, and determines whether the address of the bad sector is stored in the bad sector database at step 520. If it is determined that the bad sector address is stored in the bad sector database at step 520, the second controller 154 controls the main display unit 152 to display a bad sector detection message at step 522. Here, the bad sector detection message can comprise the number of the detected bad sectors and a bad sector recovery time e.g., a process time for again accurately checking the bad sector and writing the default data into the bad sector. The recovery of the bad sector will be described with reference to FIG. 4.

After that, if the user selects to reproduce only the access-success data sector without the bad sector, the first controller 110 detects the user's selection and transmits a playback message to the second controller 154 at step 524. The second controller 154 reproduces the access-success media data stored in the temporary buffer at step 526. However, if it is determined that the bad sector does not exist, the access-success media data is automatically read and reproduced without a user's separate playback command.

FIG. 6 is a flowchart illustrating the process of again accurately checking the bad sector later, which is detected through FIG. 5, and writing the default data into the bad sector when it is finally determined to be the bad sector. When the user selects a bad sector arrangement menu using the keypad 106 in the standby mode at step 602 of the hard disk mobile communication terminal, the first controller 110 detects the user's selection at step 604 and performs step 606. At step 606, the first controller 110 transmits a bad sector arrangement command message to the second controller 154, and the second controller 154 identifies address information of the data sector identified as the bad sector, from the bad sector database. The second controller 154 tries to access the data sector, which is positioned at the identified address, for a predetermined time and finally determines whether or not the data sector is the bad sector. The access trial is performed for a longer and additional number of times than the time and the number of times (for example, 148 times for two seconds) of step 506 of FIG. 5. This is because a temporary logic error causes the data sector to be determined as the bad sector. Therefore, the access trial is performed for longer and more times to finally determine whether the data sector is the bad sector. When the data access fails despite the access trial of more than a predetermined number of times and for a predetermined time, the second controller 154 identifies the data sector as a true bad sector and writes the default data into the corresponding data sector. The default data is set to have the predefined specific value, or is set to record 0 or 1 in all the corresponding data sectors, such as "Ox0000" or "Oxffff," thereby making it possible to detect later that the corresponding data sector is the bad sector.

In another embodiment of the present invention, a hard disk drive check menu is separately provided in the hard disk mobile communication terminal to detect and process the bad sector upon the user's selection according to need. In other words, at step 502 of generating the hard disk drive access request event, the hard disk drive access request event can be generated by a user's playback request of the media file and the bad sector can be detected. However, even though the playback request does not exist, the hard disk drive check menu can be separately provided to detect and recover the bad sector. The hard disk drive check menu comprises a disk check item for checking a whole disk, and a media file check item for checking the disk on a per-media file basis, to allow the user to execute each of them.

In the disk check item, a whole sector of the hard disk drive is checked, and when the bad sector is detected, the default data is written into the bad sector. When the user selects the disk check item and requests for disk check, it is determined that the access request event is generated at step 502 of FIG. 5, and each of the steps of FIG. 5 is performed for the whole sector of the hard disk drive. When the bad sector of the hard disk drive is detected through each step of FIG. 5, the default data is written into the detected bad sector.

Meantime, the media file check item allows the bad sector to be separately checked in each media file. When the user requests to check the bad sector in a specific media file and the access request event is generated at step 502 of FIG. 5, the bad sector is checked in the data sector having the corresponding media file stored, and then the default data is written into the detected bad sector. As a result, the access request event of step 502 of FIG. 5 can also be generated upon the playback request for the specific media file, but it is obvious that the bad sector arrangement menu is provided in the mobile communication terminal to allow the user to select the hard disk drive check menu, thereby generating the access request event.

While the invention has been shown and described with reference to a certain embodiment thereof, it will be understood by those skilled in the art that various changes in form and details may be made therein without departing from the spirit and scope of the invention as defined by the appended claims.

## Claims

1. A method for accessing a media file divided and stored in a plurality of data sectors, and processing a bad sector in a mobile communication terminal having a hard disk drive, the method comprising the steps of:
(a) generating an access request event for the media file stored in the plurality of data sectors;
(b) designating an address of a first data sector to be accessed, as an access index for indicating an address to be accessed;
(c) attempting to access the data sector positioned at the access index for a predetermined time, and reading media data from an access-success data sector when the access succeeds and writing predetermined default data into an access-failure data sector when the access fails; and
(d) determining whether a next data sector to be accessed exists, and when it is determined that the next data sector to be accessed exists, increasing the access indexing and accessing a data sector positioned at the increased access index.

2. The method of claim 1, wherein in the step (c), access is attempted for a predetermined time, which is determined on the basis of a revolution per minute (RPM) of the hard disk drive for attempting to access the data sector a predetermined number of times.

3. The method of claim 1, wherein in the step (c), the default data is a predefined specific value, or is a value of 0x0000 or Oxffff.

4. The method of claim 1, wherein in the step (c), the default data is ignored and not reproduced when the media file is reproduced.

5. A method of processing a bad sector of a hard disk drive in a hard disk mobile communication terminal, the method comprising the steps of:
(a) when an access event is generated for a media file stored in the hard disk drive, trying to access a data sector of the hard disk drive for a predetermined time;
(b) when access fails, determining that the data sector is the bad sector and storing an address of the corresponding data sector in a predetermined database, and displaying that the bad sector is detected at each media file;
(c) when a user requests to arrange the bad sector in the media file, identifying the address of the data sector from the database and re-trying to access the data sector for a predetermined time; and
(d) when access re-trial fails, finally determining that the data sector is the bad sector and writing predetermined default data into the corresponding data sector.

6. The method of claim 5, wherein in the step (a), the access event is generated by user's selection of a hard disk drive check menu provided separately.

7. The method of claim 6, wherein the hard disk drive check menu has a disk check item for checking whether a whole disk sector is normal.

8. The method of claim 6, wherein the hard disk drive check menu has a media file check item for checking whether a data sector having a specific media file stored is normal.

9. The method of claim 5, wherein in the step (a), the access event is generated when the media file is requested for playback.

10. The method of claim 5, wherein in the step (b), when it is displayed that the bad sector is detected at each media file, the number of the detected bad sectors is displayed together.

11. The method of claim 5, wherein in the step (c), access re-trial is performed for a longer time than the access trial of the first step.

12. A method for processing a bad sector of a hard disk drive in a hard disk mobile communication terminal, the method comprising the steps of:
when a user selects a hard disk drive check menu, generating an access event for a data sector, trying to access a data sector of the hard disk drive for a predetermined time;
when access fails, determining that the data sector is the bad sector and displaying that the bad sector is detected at each media file; and
writing predetermined default data into the bad sector.
